(19) Europäisches Patentamt / European Patent Office / Office européen des brevets

(11) **EP 4 383 214 A1**

(12) **EUROPEAN PATENT APPLICATION**

(43) Date of publication:
**12.06.2024 Bulletin 2024/24**

(21) Application number: **23214201.8**

(22) Date of filing: **05.12.2023**

(51) International Patent Classification (IPC):
***G06V 20/52*** *(2022.01)* ***G06V 20/58*** *(2022.01)*

(52) Cooperative Patent Classification (CPC):
**G06V 20/58; G06V 20/52;** G06V 10/82

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2022 JP 2022197142**

(71) Applicant: **KABUSHIKI KAISHA TOYOTA JIDOSHOKKI**
**Kariya-shi, Aichi 448-8671 (JP)**

(72) Inventor: **OKAYAMA, Ken**
**Kariya-shi, Aichi, 448-8671 (JP)**

(74) Representative: **Hoffmann Eitle**
**Patent- und Rechtsanwälte PartmbB**
**Arabellastraße 30**
**81925 München (DE)**

(54) **OBJECT DETECTION DEVICE**

(57)   An object detection device (17), which performs object detection processing to detect an area where a target object is present in images (IM), includes a memory (17b) storing a bounding box (B) indicating the area where the target object is present, a processor (17a) executing program codes or commands, an acquisition unit acquiring a detection target image (IMc), a providing unit providing a plurality of rectangular frames (A) in the detection target image (IMc), a calculation unit performing calculation processing to calculate a similarity score between the bounding box (B) and the rectangular frame (A), an addition unit performing addition processing to increase a confidence score, a deletion unit performing deletion processing to delete a rectangular frame (A) having the confidence score less than a confidence score threshold, and an output unit outputting a rectangular frame (A) remaining after the deletion processing as the bounding box (B).

FIG. 10

**EP 4 383 214 A1**

**Description**

BACKGROUND ART

The present invention relates to an object detection device.

Japanese Patent Application Publication No. 2021-163127 discloses an object detection device that performs an object detection processing for detecting an area where a target object is present from an image captured by a camera. The object detection device performs the object detection processing, for example, in a following manner. The object detection device adds a plurality of rectangular frames indicating candidate areas where the target object is present in the image. Each of the rectangular frames is associated with a confidence score, which is an index indicating reliability that an object within the rectangular frame is the target object. The object detection device performs deletion processing in which rectangular frames whose confidence score are less than a confidence score threshold, out of the plurality of rectangular frames, are deleted. The object detection device performs NMS processing when a plurality of rectangular frames remains after the deletion processing. The NMS processing is a process of deleting a rectangular frame with a lower confidence score when an overlapping ratio of two rectangular frames that overlap each other exceeds a threshold. The overlap ratio is calculated by dividing the area of intersection of the two rectangular frames that overlap with each other by the area of union of the two rectangular frames. Then, the object detection device outputs the rectangular frame remaining after the NMS processing as a bounding box indicating the area where the target object is present.

Technical Problem

In the above object detection processing, the confidence score of a rectangular frame may be less than the confidence score threshold even though an object within the rectangular frame is the target object. In this case, such a rectangular frame is deleted by the deletion processing, so that it is not output as a bounding box. That is, the target object within the rectangular frame is not detected.

SUMMARY

In accordance with an aspect of the present invention, there is provided an object detection device, which performs object detection processing to detect an area where a target object is present in images captured by a camera, including a memory configured to store a bounding box indicating the area where the target object is present output to a comparison image of the images, a processor configured to execute program codes or commands stored in the memory, an acquisition unit configured to acquire a detection target image of the images, the detection target image being captured at a time after the comparison image is captured, a providing unit configured to provide a plurality of rectangular frames each indicating a candidate for the area where the target object is present in the detection target image, a calculation unit configured to perform calculation processing to calculate a similarity score that is the index indicating a degree of similarity between the bounding box in the comparison image and the rectangular frame in the detection target image, an addition unit configured to perform addition processing to increase a confidence score of a rectangular frame, out of the plurality of rectangular frames, having the similarity score that satisfies a predetermined condition, a deletion unit configured to perform deletion processing to delete a rectangular frame, out of the plurality of rectangular frames, having the confidence score less than a confidence score threshold after the addition processing, and an output unit configured to output a rectangular frame remaining after the deletion processing as the bounding box for the comparison image.

BRIEF DESCRIPTION OF THE DRAWINGS

The invention, together with objects and advantages thereof, may best be understood by reference to the following description of the embodiments together with the accompanying drawings in which:

FIG. 1 is a plan view illustrating a forklift truck according to an embodiment;
FIG. 2 is a block diagram illustrating a configuration of the forklift truck according to the embodiment;
FIG. 3 is a view illustrating an example of a detection result of an object detection device;
FIG. 4 is a flowchart showing conventional object detection processing;
FIG. 5 is a view illustrating an example of a first frame image;
FIG. 6 is a view illustrating the first frame image to which a rectangular frame is added;
FIG. 7 is a view illustrating the first frame image after deletion processing;
FIG. 8 is a view illustrating the first frame image after NMS processing;

FIG. 9 is a flowchart showing high-precision detection processing;

FIG. 10 is a view illustrating an example of a second frame image;

FIG. 11 is a view illustrating the second frame image to which a rectangular frame is added;

FIG. 12 is a view illustrating the second frame image after the NMS processing;

FIG. 13 is a view for describing a position score, an aspect ratio score, and an area score;

FIG. 14 is a view for describing calculation processing;

FIG. 15 is a view illustrating the second frame image after the deletion processing;

FIG. 16 is a view illustrating the second frame image in which a bounding box is output;

FIG. 17 is a view illustrating a comparison image before the forklift truck makes sharp turn;

FIG. 18 is a view illustrating a detection target image after the forklift truck has made sharp turn;

FIG. 19 is a view illustrating a comparison image before the forklift truck makes rapid acceleration;

FIG. 20 is a view illustrating the detection target image after the forklift truck has made rapid acceleration;

FIG. 21 is a view illustrating the nth object detection processing;

FIG. 22 is a view illustrating the (n+1)th object detection processing; and

FIG. 23 is a view illustrating the (n+2)th object detection processing.

DESCRIPTION OF EMBODIMENTS

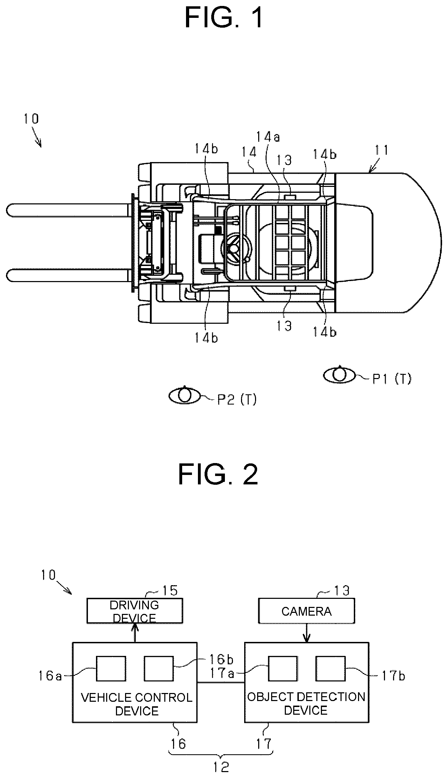

The following will describe an embodiment of an object detection device with reference to FIGS. 1 to 16. In the present embodiment, the object detection device is mounted on a forklift truck as a vehicle.

Forklift Truck

As illustrated in FIGS. 1 and 2, a forklift truck 10 includes a vehicle main body 11, a control unit 12, and a camera 13. The vehicle main body 11 has a vehicle body 14, and a driving device 15. The control unit 12 has a vehicle control device 16 and an object detection device 17.

As illustrated in FIG. 1, the vehicle body 14 has a head guard 14a, and four pillars 14b. The head guard 14a is supported by the four pillars 14b.

As illustrated in FIG. 2, the vehicle control device 16 includes a processor 16a, and a memory 16b. The processor 16a is, for example, a CPU (Central Processing Unit), a GPU (Graphics Processing Unit), or a DSP (Digital Signal Processor). The memory 16b includes a RAM (Random Access Memory) and a ROM (Read Only Memory). The memory 16b stores program codes or commands configured to cause the processor 16a to execute processes. The memory 16b, that is, a computer readable medium, includes any available medium that is accessible by a general-purpose computer or a dedicated computer. The vehicle control device 16 may include a hardware circuit such as an ASIC (Application Specific Integrated Circuit) or an FPGA (Field Programmable Gate Array). The vehicle control device 16, which is a process circuit, may include one or more processors that operates in accordance with computer programs, one or more hardware circuits such as the ASIC or the FPGA, or a combination thereof.

The vehicle control device 16 is connected to the driving device 15. The vehicle control device 16 controls the driving device 15. In addition, the vehicle control device 16 is connected to the object detection device 17. The vehicle control device 16 controls the driving device 15 based on the detection result of the object detection device 17.

The camera 13 has an imaging element. Examples of the imaging element include a CCD image sensor and a COMS image sensor. The camera 13 is an RGB camera. The camera 13 outputs an image composed of three-color signals of red, green, and blue. The camera 13 of the present embodiment is a monocular camera.

As illustrated in FIG. 1, the camera 13 is attached to each of opposite sides of the head guard 14a in the vehicle width direction. The camera 13 captures an image of a side of the forklift truck 10. The camera 13 repeatedly captures an image at a predetermined imaging cycle.

Object Detection Device

As illustrated in FIG. 2, the object detection device 17 includes a processor 17a, and a memory 17b. The processor 17a is a CPU, a GPU, or a DSP, for example. The memory 17b includes a RAM and a ROM. The memory 17b stores program codes or commands configured to cause the processor 17a to execute processes. The memory 17b, that is, a computer readable medium, includes any available medium that is accessible by a general-purpose computer or a dedicated computer. The object detection device 17 may include a hardware circuit such as an ASIC or an FPGA. The object detection device 17, which is a process circuit, may include one or more processors that operates in accordance with computer programs, one or more hardware circuits such as the ASIC or the FPGA, or a combination thereof.

The object detection device 17 performs object detection processing in which an area where a target object is present from the image captured by the camera 13 is detected. Specifically, the object detection device 17 detects the area where the target object is present by detecting a class of an object and the area where the object is present from the image captured by the camera 13. Classes of objects are set so that the object detection device 17 can at least detect the target object. Thus, the classes of objects at least include a target object. The object detection device 17 may be configured to classify objects into other classes by setting a plurality of target objects for the classes of the object.

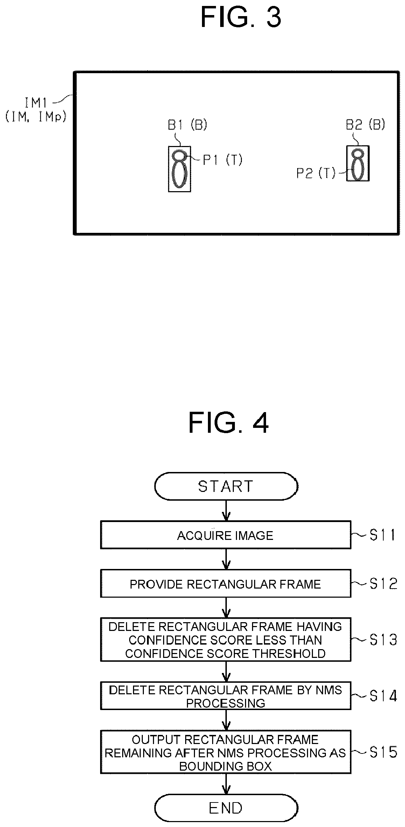

FIG. 3 is an example of an image IM captured by the camera 13. As illustrated in FIG. 1, a target object T appears in the image IM when the target object T is present on a side of the forklift truck 10. In the present embodiment, the target object T is a person. The object detection device 17 outputs a bounding box B indicating an area where the target object T is present to the image IM. The bounding box B is a rectangular frame that indicates the area where the target object T is present.

Object Detection Processing

The following will describe object detection processing performed by the object detection device 17. The object detection processing is repeatedly performed at a predetermined detection cycle. The detection cycle is set to the imaging cycle of the camera 13 or longer. Contents of the object detection processing differ between first object detection processing and second and subsequent object detection processing. It is noted that the first object detection processing is the object detection processing that is performed at the time of starting object detection.

Firstly, the first object detection processing will be described in detail. The contents of the first object detection processing are the same as those of the conventional object detection processing.

As shown in FIG. 4, at Step S11, the object detection device 17 acquires the image IM captured by the camera 13. The object detection device 17 acquires a first frame image IM1 at Step S11.

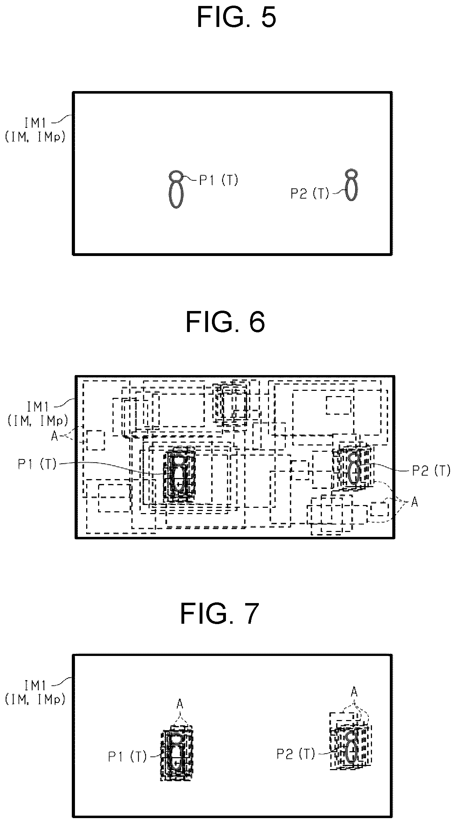

As illustrated in FIG. 5, two persons P1, P2 are shown in the first frame image IM1. That is, two target objects T are shown in the first frame image IM1.

As shown in FIG. 4, at Step S12, the object detection device 17 provides a plurality of rectangular frames A in the image IM. Thus, the object detection device 17 includes a providing unit that provides a plurality of rectangular frames A in the image IM. The rectangular frames A correspond to candidate areas for the area where the target object T is present in the image IM. A confidence score is associated with each of the rectangular frames A. The confidence score is an index of the reliability indicating that an object within the rectangular frame A is the target object T. The confidence score increases when the probability that the object within the rectangular frame A is the target object T increases. The confidence score of the present embodiment is an index that indicates the object within the rectangular frame A is a person. The confidence score increases as the probability that the object within the rectangular frame A is the target object T increases.

Processing of Step S12 is performed using, for example, a trained model that has been trained by machine learning. The trained model is stored in the memory 17b of the object detection device 17. The trained model is a model that performs object detection. Examples of the trained model include Faster R-CNN (Regional Convolutional Neural Network) and YOLO (You Only Look Once) v3.

The object detection device 17 produces a feature map from the image IM. The object detection device 17 sets a plurality of anchor boxes for the created feature map. The plurality of anchor boxes are rectangular frames. The plurality of anchor boxes are set to have different aspect ratios. The object detection device 17 provides the plurality of rectangular frames A by adjusting the positions and sizes of the anchor boxes containing the objects using the trained model.

As illustrated in FIG. 6, a large number of rectangular frames A are provided to the first frame image IM at Step S12. In the large number of rectangular frames A, the rectangular frames A indicating areas where a person as the target object T is present and the rectangular frames A indicating areas where an object other than persons is present are mixed. The confidence scores for the rectangular frames A indicating the areas where a person is present are higher than those for the rectangular frames A indicating the areas where an object other than persons is present.

As shown in FIG. 4, at Step S13, the object detection device 17 performs deletion processing to delete the rectangular frames A having a confidence score less than a confidence score threshold from the plurality of rectangular frames A provided to the image IM. Therefore, the object detection device 17 includes a deletion unit that performs the deletion processing to delete the rectangular frames A having a confidence score less than the confidence score threshold. The number of the rectangular frames A is reduced by Step S13.

As illustrated in FIG. 7, by step S13, the rectangular frames A indicating the areas where an object other than a person is present are deleted from the large number of rectangular frames A provided to the first frame image IM1. On the other hand, the rectangular frames A indicating the areas where a person is present remain without being deleted.

As shown in FIG. 4, at Step S14, the object detection device 17 performs NMS (Non Maximum Suppression) processing when the plurality of rectangular frames A remain after the deletion processing at Step S13. Therefore, the object detection device 17 has an NMS processing unit that performs the NMS processing. The number of rectangular frames A is further reduced by Step S14.

The object detection device 17 performs the following processes as the NMS processing.

The object detection device 17 calculates an overlap ratio. The overlap ratio is also called IoU (Intersection over Union). The IoU is expressed by the following equation (1).

$$IoU = (Area\ of\ intersection)/(Area\ of\ union)\dots(1)$$

"Area of intersection" is an area of a product set of two rectangular frames A that overlap each other. The "Area of intersection" may be said to be an area of a portion where the two rectangular frames A overlap each other. The "Area of union" is an area of union of the two rectangular frames A that overlap each other. The Area of union may be said to be the area of a portion included in at least one of the two rectangular frames A. In this way, the overlap ratio is calculated by dividing the Area of intersection of the two rectangular frames A that overlap each other by the Area of union of the two rectangular frames A. If the overlap ratio exceeds an overlap ratio threshold, the object detection device 17 deletes the rectangular frame A with the lower confidence score of among the two overlapping rectangular frames A. In other words, the object detection device 17 deletes the rectangular frame A by the NMS processing.

The object detection device 17 performs the NMS processing on all combinations of the plurality of rectangular frames A remaining after the deletion processing. As a result, among the plurality of rectangular frames A, the rectangular frames A whose overlap ratio exceeds the threshold and whose confidence score is lower than that of the overlapping rectangular frame A is deleted.

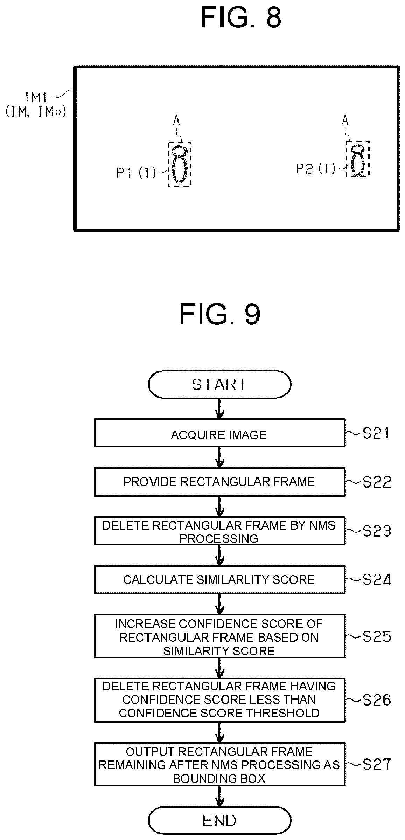

As illustrated in FIG. 8, one rectangular frame A indicating an area where the person P1 is present and one rectangular frame A indicating an area where the person P2 is present remain in the first frame image IM1 after Step S14.

As shown in FIG. 4, at Step S15, the object detection device 17 outputs the rectangular frame A remaining after the NMS processing as a bounding box B indicating the area where the target object T is present. That is, the object detection device 17 includes an output unit configured to output a rectangular frame remaining after the deletion processing as the bounding box for the comparison image. The memory 17b stores the bounding box B output to the image IM. That is, the memory 17b stores the detection result of the first object detection processing.

As illustrated in FIG. 3, two bounding boxes B are output to the first frame image IM1 by Step S15. Of the two bounding boxes B, one of the bounding boxes B is defined as a first bounding box B1, and the other of the bounding boxes B is defined as a second bounding box B2. The first bounding box B1 indicates the area where the person P1 is present. The second bounding box B2 indicates the area where the person P2 is present.

Next, the second and subsequent object detection processing will be described. The second and subsequent object detection processing is high-precision detection processing. The high-precision detection processing is to detect the area where the target object T is present from an (n+1)th frame image IM using the bounding box B output to an nth frame image IM. In the following, the nth frame image IM is referred to as a comparison image IMp. The (n+1)th frame image IM is referred to as a detection target image IMc. The detection target image IMc is an image IM captured at a time after the comparison image IMp is captured. In other words, the comparison image IMp is an image IM captured at a time before the detection target image IMc is captured.

For example, in the second object detection processing, the area where the target object T is present from a second frame image IM2 is detected using the bounding box B output to the first frame image IM1. In this case, the first frame image IM1 is the comparison image IMp. The second frame image IM2 is the detection target image IMc.

For example, in the third object detection processing, the area where the target object T is present from a third frame image IM3 is detected using the bounding box B output to the second frame image IM2. In this case, the second frame image IM2 is the comparison image IMp. The third frame image IM3 is the detection target image IMc.

In the following, although the second object detection processing will be described in detail as an example of the high-precision detection processing, the same high-precision detection processing will be performed in the third and subsequent object detection processing.

As shown in FIG. 9, at Step S21, the object detection device 17 acquires the image IM captured by the camera 13. That is, the object detection device 17 acquires the target detection image IMc at Step S21. Thus, the object detection device 17 is an acquisition unit that acquires the detection target image IMc.

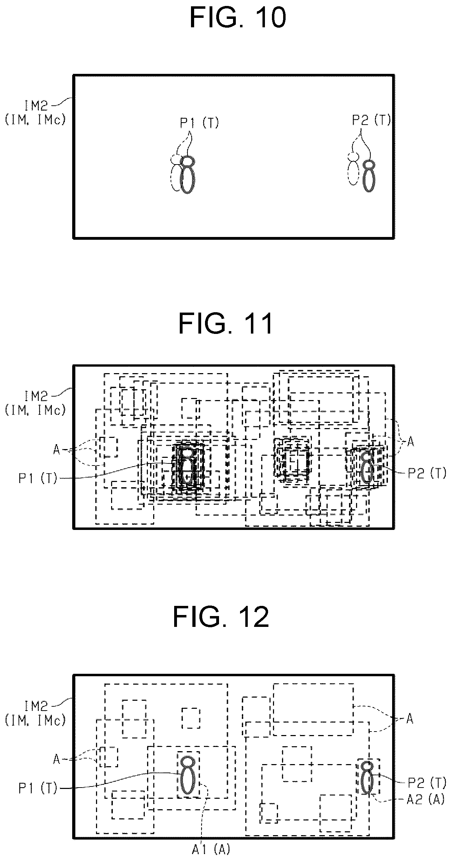

As illustrated in FIG. 10, in the second object detection processing, the object detection device 17 acquires the second frame image IM2 as the detection target image IMc. The second frame image IM2 is an image IM captured at a time after the first frame image IM1 is captured. Similarly to the first frame image IM1, the two persons P1, P2 are shown in the second frame image IM2. In FIG. 10, the two persons P1, P2 appearing in the first frame image IM1 are illustrated by two-dot chain lines in the second frame image IM2.

When the camera 13 captures an image at a short cycle and a relative speed between the camera 13 and the target object T is low, a state of the target object T in the image IM should not vary significantly between the comparison image IMp and the detection target image IMc. Here, the state of the target object T in the image IM is, for example, a position, a shape, and a size of the target object T in the image IM. When the camera 13 captures an image at the short cycle and the relative speed between the camera 13 and the target object T is low, the position, the shape, the size of the target object T in the image IM do not significantly vary between the comparison image IMp and the detection target image IMc.

In the present embodiment, an interval between a time at which the first frame image IM1 is captured and a time at which the second frame image IM2 is captured is short, and the relative speed between the forklift truck 10 to which the camera 13 is attached and the persons P1, P2 is low. Therefore, the positions, the shapes, and the sizes of the persons P1, P2 in the second frame image IM2 are not significantly varied from those in the first frame image IM1.

As shown in FIG. 9, at Step S22, the object detection device 17 provides a plurality of rectangular frames A to the detection target image IMc. It is noted that the processing at Step S22 is the same as that at Step S12, so that the detailed description of Step S22 will be omitted.

As illustrated in FIG. 11, in the second object detection processing, the object detection device 17 provides the plurality of rectangular frames A to the second frame image IM2.

As shown in FIG. 9, at Step S23, the object detection device 17 performs the NMS processing for the plurality of rectangular frames A provided in the detection target image IMc. It is noted that the processing at Step S23 is the same as that at Step S14, so that the detailed description thereof will be omitted.

As illustrated in FIG. 12, in the second object detection processing, the object detection device 17 performs the NMS processing for the plurality of rectangular frames A provided in the second frame image IM2. The rectangular frames A indicating areas where a person is present and the rectangular frames A indicating areas where an object other than a person is present are mixed in the plurality of rectangular frames A after the NMS processing. There are two rectangular frames A indicating the areas where a person is present. Of the two rectangular frames A indicating the areas where a person is present, one of the rectangular frames A is defined as a first rectangular frame A1, and the other of the rectangular frames A is defined as a second rectangular frame A2. The first rectangular frame A1 is the rectangular frame A that indicates the area where the person P1 is present. The second rectangular frame A2 is a rectangular frame A that indicates the area where the person P2 is present.

The confidence score of the first rectangular frame A1 is equal to or greater than the confidence score threshold. The confidence score of the second rectangular frame A2 is less than the confidence score threshold. Since the second rectangular frame A2 is the rectangular frame A that indicates the area where the person is present, the confidence score of the second rectangular frame A2 should be equal to or higher than the confidence score threshold, but the confidence score becomes less than the confidence score threshold for some reason. The confidence scores of the rectangular frames A other than the first rectangular frame A1 and the second rectangular frame A2 are less than the confidence score threshold.

As shown in FIG. 9, at Step S24, the object detection device 17 calculates a similarity score which is an index indicating the degree of similarity between the bounding box B output to the comparison image IMp and the rectangular frame A in the detection target image IMc. Thus, the object detection device 17 includes a calculation unit that calculates the similarity score indicating the index of the degree of similarity between the bounding box B output to the comparison image IMp and the rectangular frame A in the detection target image IMc. The similarity score between the bounding box B output to the comparison image IMp and the rectangular frame A in the detection target image IMc increases as the similarity increases.

The object detection device 17 calculates the similarity score for all combinations of the bounding boxes B in the comparison image IMp and the rectangular frames A in the detection target image IMc. That is, when the number of bounding boxes B in the comparison image IMp is M and the number of rectangular frames A in the detection target image IMc is N, the number of the similarity scores to be calculated by the object detection device 17 is M × N.

In the second object detection processing, the object detection device 17 calculates the similarity score for each of the two bounding boxes B in the first frame image IM1 and the corresponding one of the rectangular frames A remaining after the NMS processing among the rectangular frames A in the second frame image IM2.

In the present embodiment, when the similarity score is R, R is expressed by the following equation (2).

$$R = Rd\alpha \times Ra\beta \times Rs\gamma \ldots (2)$$

Rd represents a position score. Ra represents an aspect ratio score. Rs represents an area score. The position score, the aspect ratio score, and the area score will be described later. $\alpha$ is a coefficient of 0 or more for adjusting the importance of the position score. The higher the importance of the position score, the larger the value is set for $\alpha$. $\beta$ is a coefficient of 0 or more for adjusting the importance of the aspect ratio score. The higher the importance of the aspect ratio score, the larger the value is set for $\beta$. $\gamma$ is a coefficient of 0 or more for adjusting the importance of the area score. The higher the importance of the area score, the larger the value is set for $\gamma$.

The position score is an index indicating the degree of similarity between the position of the bounding box B in the comparison image IMp and the position of the rectangular frame A in the detection target image IMc. The more similar the position of bounding box B in comparison image IMp and the position of rectangular frame A in detection target image IMc are, the higher the position score becomes. The position score is normalized so that the possible value is from 0 to 1.

When the position score is Rd, Rd is expressed, for example, by the following equation (3).

$$Rd = 1 - d2/c2 \ldots (3)$$

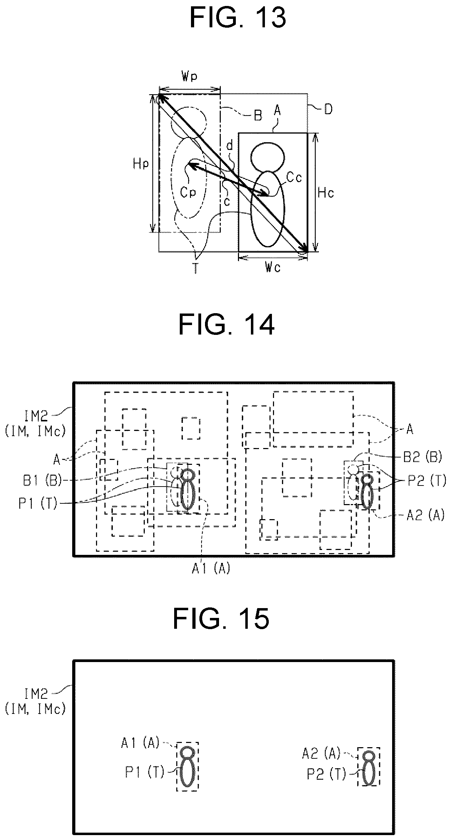

As illustrated in FIG. 13, d represents a distance between the center Cp of the bounding box B and the center Cc of the rectangular frame A. c represents a length of the diagonal of the smallest rectangle D among the bounding boxes B and the rectangular frames A.

The aspect ratio score is an index indicating the degree of similarity between an aspect ratio Ap of the bounding box B and an aspect ratio Ac of the rectangular frame A. The more similar the aspect ratio Ap of the bounding box B and the aspect ratio Ac of the rectangular frame A are, the higher the aspect ratio score becomes. The aspect ratio score is normalized so that the possible value is from 0 to 1.

When the aspect ratio score is Ra, Ra is expressed by the following equation (4), for example.

$$Ra = 1 - | Ac - Ap| \ldots (4)$$

Ap is expressed as Sp/Lp. Wp represents a width of the bounding box B. Hp represents a height of the bounding box B. Lp is the larger value of Wp and Hp. Sp is the smaller value of Wp and Hp. For example, when Wp is larger than Hp, Lp = Wp and Sp = Hp are satisfied. For example, when Wp is smaller than Hp, Lp = Hp and Sp = Wp are satisfied.

Ac is expressed as Sc/Lc. Wc represents a width of the rectangular frame A. Hc represents a height of the rectangular frames A. Lc is the larger value of Wc and Hc. Sc is the smaller value of Wc and Hc. For example, when Wc is larger than Hc, Lc = Wc and Sc = Hc are satisfied. For example, when Wc is smaller than Hc, Lc = Hc and Sc = Wc are satisfied.

The area score is an index indicating the degree of similarity between an area Sp of the bounding box B and an area Sc of the rectangular frame A. The area Sp of the bounding box B is expressed as Hp × Wp. The area Sc of the rectangular frame A is expressed as Hc × Wc. The more similar the area Sp of bounding box B and the area Sc of rectangular frame A are, the higher the area score becomes. The area score is normalized so that the possible value is from 0 to 1.

When the area score is Rs, Rs is expressed, for example, by the following equation (5).

$$Rs = Ss/Sl \ldots (5)$$

Sl is the larger value of Sp and Sc. Ss is the smaller value of Sp and Sc. For example, when Sp is greater than Sc, Sl = Sp and Ss = Sc are satisfied. For example, when Sp is smaller than Sc, Sl = Sc and Ss = Sp are satisfied.

As illustrated in FIG. 14, in the second object detection processing, among the plurality of rectangular frames A, the first rectangular frame A1 is most similar to the first bounding box B1. Therefore, of the similarity scores between the first bounding box B1 and the rectangular frames A, the similarity score between the first bounding box B1 and the first rectangular frame A1 becomes the highest. In addition, among the plurality of rectangular frames A, the second rectangular frame A2 is most similar to the second bounding box B2. Therefore, of the similarity scores between the first bounding box B2 and the rectangular frames A, the similarity score between the second bounding box B2 and the second rectangular frame A2 is the highest.

As shown in FIG. 9, at Step S25, the object detection device 17 performs addition processing to increase the confidence score of the rectangular frame A having a similarity score that satisfies a predetermined condition, among the plurality of rectangular frames A. That is, the object detection device 17 increases the confidence score of the rectangular frame A based on the similarity score. Therefore, the object detection device 17 includes an addition unit that performs the addition processing to increase the confidence score of the rectangular frame A whose similarity score satisfies the predetermined condition.

In the present embodiment, the object detection device 17 increases the confidence score of the rectangular frame A, which has the similarity score that is the highest among the plurality of rectangular frames A and is equal to or higher than a similarity score threshold. Therefore, the predetermined condition of the present embodiment is that the similarity score is the highest and is equal to or greater than the similarity score threshold. An increase amount of the confidence score is set so that the confidence score after the addition processing becomes equal to or greater than the confidence score threshold.

As described above, in the second object detection processing illustrated in FIG. 13, the similarity score between the first bounding box B1 and the first rectangular frame A1 is the highest among the similarity scores between the first bounding box B1 and the rectangular frames A. Additionally, the similarity score between the first bounding box B1 and the first rectangular frame A1 is equal to and greater than the similarity score threshold. Therefore, the object detection device 17 increases the confidence score of the first rectangular frame A1. As a result, the confidence score of the first rectangular frame A1, which has already been equal to or higher than the confidence score threshold before the addition processing, becomes even higher by the addition processing.

Furthermore, the similarity score between the second bounding box B2 and the second rectangular frame A2 is the highest among the similarity scores between the first bounding box B2 and the rectangular frames A. The similarity score between the second bounding box B2 and the second rectangular frame A2 is equal to and greater than the similarity score threshold. Therefore, the object detection device 17 increases the confidence score of the second rectangular frame A2. As a result, the confidence score of the second rectangular frame A2, which has been less than the confidence score threshold before the addition processing, becomes equal to or higher than the confidence score threshold by the addition processing.

As shown in FIG. 9, at Step S26, the object detection device 17 deletes the rectangular frames A whose confidence score are less than a confidence score threshold from the plurality of rectangular frames A provided to the object detection target image IMc. It is noted that the processing at Step S26 is the same as that at Step S13, so that the detailed explanation will be omitted.

As illustrated in FIG. 15, in the second object detection processing, the object detection device 17 deletes the rectangular frames A whose confidence score are less than the confidence score threshold from the rectangular frame A that remain after the NMS processing, among the rectangular frames A in the second frame image IM2. Among the plurality of rectangular frames A, the confidence scores of the first rectangular frame A1 and the second rectangular frame A2 are equal to or greater than the confidence score threshold, so that they are not deleted. On the other hand, among the plurality of rectangular frames A, the confidence scores of the rectangular frames A other than the first rectangular frame A1 and the second rectangular frame A2 are less than the confidence score threshold, so that they are deleted. Therefore, only the first rectangular frame A1 and the second rectangular frame A2 remain.

As shown in FIG. 9, at Step S27, the object detection device 17 outputs the rectangular frame A that remains without being deleted by the deletion processing at Step S26 as a bounding box B for the detection target image IMc. The memory 17b of the object detection device 17 stores an output result of the bounding box B for the comparison image IMp. That is, the memory 17b of the object detection device 17 stores the detection result of the current object detection processing. It is noted that the processing at Step S27 is the same as that at step S15, so that the detailed explanation will be omitted.

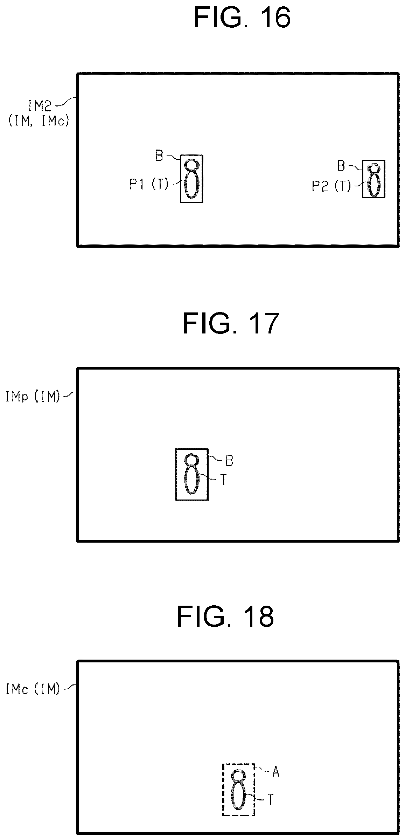

As illustrated in FIGS. 15 and 16, in the second object detection processing, the object detection device 17 outputs the first rectangular frame A1 and the second rectangular frame A2 that remain without being deleted by the deletion processing as the bounding boxes B to the second frame image IM2. The object detection device 17 stores the output result of the bounding boxes B to the second frame image IM2. That is, the object detection device 17 stores the detection result of the second object detection processing.

Operation of Embodiment

The following will describe an operation of the present embodiment.

Since the second rectangular frame A2 is the rectangular frame A that indicates the area where the person P2 as the target object T is present, the second rectangular frame A2 is the rectangular frame A that should be output as the bounding box B. However, the confidence score of the second rectangular frame A2 before the addition processing is lower than the confidence score threshold. Therefore, in the case of the conventional object detection processing, the second rectangular frame A2 is deleted.

The state of the person P2 in the second frame image IM2 is similar to the state of the person P2 in the first frame image IM1. Therefore, the second bounding box B2 output to the first frame image IM1 and the second rectangular frame A2 in the second frame image IM2 should be similar. That is, the similarity score between the second bounding box B2 and the second rectangular frame A2 should be high.

Therefore, the object detection device 17 of the present embodiment calculates the similarity score between the second bounding box B2 and each of the rectangular frames A. The object detection device 17 increases the confidence score of the second rectangular frame A2 whose similarity score relative to the second bounding box B2 is the highest among the plurality of rectangular frames A, and whose similarity score is equal to or higher than the similarity score threshold. As a result, the confidence score of the second rectangular frame A2, which is similar to the second bounding box B2, increases. Then, the object detection device 17 deletes the rectangular frames A whose confidence scores are less than the confidence score threshold from the plurality of rectangular frames A. This allows the second rectangular frame A2, which would have been deleted in the conventional object detection processing, to remain.

Effects of Embodiment

The following will describe effects of the present embodiment.

(1) When the state of the target object T in the detection target image IMc is similar to the state of the target object T in the comparison image IMp, the rectangular frame A indicating the area where the object T is present, among the plurality of rectangular frames A in the detection target image IMc, is similar to the bounding box B output to the comparison image IMp. Therefore, the object detection device 17 calculates the similarity score between the bounding box B and each of the rectangular frames A. The object detection device 17 increases the confidence score of the rectangular frame A similar to the bounding box B by increasing the confidence score of the rectangular frame A whose similarity score is the highest among the plurality of rectangular frames A, and is equal to or higher than a similarity score threshold. Then, the object detection device 17 deletes the rectangular frames A whose confidence score are less than the confidence score threshold from the plurality of rectangular frames A. This allows the rectangular frames A, which would have been deleted in the conventional object detection processing because the confidence score is less than the confidence score threshold although the rectangular frame A indicates the area where the target object T is present, to remain. In this way, the precision in detecting the area where the target object T is present from the detection target image IMc may be improved by using the detection result of the previous object detection processing.

(2) For example, the following three cases can be considered as cases where the state of the target object T in the detection target image IMc is similar to the state of the target object T in the comparison image IMp. In a first case, the position of the target object T in the comparison image IMp and the position of the target object T in the detection target image IMc are similar. In this case, the position of the bounding box B and the position of the rectangular frames A indicating the area where the target object T is present are similar. In a second case, the shape of the target object T in the comparison image IMp and the shape of the target object T in the detection target image IMc are similar. In this case, the aspect ratio Ap of the bounding box B and the aspect ratio Ac of the rectangular frame A indicating the area where the target object T is present are similar. In a third case, the size of the target object T in the comparison image IMp and the size of the target object T in the detection target image IMc are similar. In this case, the area Sp of the bounding box B and the area Sc of the rectangular frames A indicating the area where the target object T is present are similar.
From the above, the object detection device 17 calculates the similarity score using the position score, the aspect ratio score, and the area score. This allows a rectangular frame A whose position, aspect ratio, and area are similar to those of the bounding box B to be identified more easily from the plurality of rectangular frames A in the detection target image IMc.

(3) The object detection device 17 uses the product of the position score, the aspect ratio score, and the area score for the similarity score. According to this configuration, the rectangular frame A that is similar in the position, the aspect ratio, and the area to the bounding box B may be more easily identified from the plurality of rectangular frames A in the detection target image IMc. That is, the rectangular frame A that is more similar to the bounding box B may be identified more easily.

(4) The object detection device 17 performs the NMS processing for the plurality of rectangular frames A in the detection target image IMc. As the calculation processing, the object detection device 17 calculates the similarity score between the bounding box B in the comparison image IMp and the rectangular frames A after the NMS processing. According to this configuration, since the number of the rectangular frames A is reduced by the NMS processing, the load of the calculation processing performed after the NMS processing may be reduced.

(5) The high-precision detection processing includes Steps S22, S23, S26 which are also performed in the conventional object detection processing. Therefore, the high-precision detection processing may be easily employed.

(6) The vehicle control device 16 of the forklift truck 10 controls the driving device 15 based on the detection result of the object detection device 17. In this case, if the target object T is not detected, a delay in the control of the driving device 15 by the vehicle control device 16 may occur, so that the target object T needs to be constantly detected. Therefore, it is particularly effective to improve the precision in detecting the target object T by the object detection device 17 of the present embodiment.

(7) The object detection device 17 performs light-load processing such as the calculation processing and the addition processing in addition to the conventional object detection processing, which increases the precision in detecting the target object T. Therefore, for example, the detection interval can be made shorter than when the precision in detecting the target object T is improved by heavy-load processing such as optical flow.

(8) As a method for increasing the recall, which is an index indicating how infrequent the target object T is undetected, for example, lowering the confidence score threshold in the conventional object detection processing may be considered. In this case, the rectangular frames A is less likely to be deleted even if the confidence score of the rectangular frame A indicating the area where the target object T is present is low. However, this makes the rectangular frames A indicating the areas where objects other than the target object T are present less likely to be deleted, which decreases the precision, which is an index indicating how few the number of false positives is. In contrast, the present embodiment may prevent the rectangular frame A indicating the area where the target object T is present from being deleted without changing the confidence score threshold. As a result, the recall may be increased while a decrease in the precision is suppressed.

Modifications

The embodiment may be modified in various manners, as exemplified below. The above embodiment and the following modifications may be implemented in combination with each other within a technically consistent range.

The equation for the similarity score in the above embodiment is an example. The equation for the similarity score may be modified in an appropriate manner as long as the similarity score increases as the bounding box B and the rectangular frame A become more similar.

The similarity score need not be the product of the position score, the aspect ratio score, and the area score. The similarity score may be the sum of the position score, the aspect ratio score, and the area score. That is, the similarity score may be calculated with an equation, i.e., $R = Rd + Ra + Rs$.

Types of scores used to calculate the similarity score need not necessarily be three types. The number of types of scores used to calculate the similarity score may be one type, two types, or four or more types. For example, when the similarity score is calculated using at least one of the position score, the aspect ratio score, and the area score, the same effect as (2) of the above embodiment can be obtained. It is noted that "at least one of the position score, the aspect ratio score, and the area score" means "only one" or "any combination of two or more" of the position score, the aspect ratio score, and the area score.

The scores used to calculate the similarity score are not limited to the position score, the aspect ratio score, and the area score. Examples of other scores that may be used to calculate the similarity score include an angle score, a width score, a height score, and a feature amount score.

The angle score is a score that increases as the angle of the bounding box B with respect to a desired reference point of the image IM and the angle of the rectangular frame A with respect to the reference point of the image IM becomes more similar. The width score is a score that increases as the width Wp of the bounding box B and the width Wc of the rectangular frame A become more similar. The height score is a score that increases as the height Hp of the bounding box B and the height Hc of the rectangular frame A become more similar. The feature amount score is a score that increases as the feature amount extracted within the bounding box B and the feature value extracted within the rectangular frame A become more similar.

The equation for the position score in the above embodiment is an example. The equation for the position score may be modified in an appropriate manner as long as the position score increases as the position of the bounding box B in the comparison image IMp and the position of the rectangular frame A in the detection target image IMc become more similar.

For example, when the moving direction of the forklift truck 10 on which the camera 13 is mounted and the moving direction of the target object T can be obtained, the object detection device 17 may calculate the position score using the distance and the angle of a direction vector corresponding to the moving direction in the image IM.

The equation for the aspect ratio score in the above embodiment is an example. The equation for the aspect ratio score may be modified in an appropriate manner as long as the aspect ratio score increases as the aspect ratio Ap of the bounding box B and the aspect ratio Ac of the rectangular frame A become more similar.

The equation for the area score in the above embodiment is an example. The equation for the area score may be modified in an appropriate manner as long as the area score increases as the area Sp of the bounding box B and the area Sc of the rectangular frame A become more similar.

The object detection device 17 may detect a motion of the forklift truck 10. That is, the object detection device 17 may include a motion detection unit that detects the motion of the forklift truck 10. The object detection device 17 may detect the motion of the forklift truck 10, for example, based on information input from the forklift truck 10. Examples of the information input from the forklift truck 10 include a measurement result by an inertial measurement unit (IMU), a steering wheel operation by an operator of the forklift truck 10, and an operation amount of an accelerator pedal by the operator of the forklift truck 10. Furthermore, the object detection device 17 may detect the motion of the forklift truck 10 by performing processing such as optical flow on the acquired image IM. Then, the object detection device 17 adjusts α, β, γ according to the detected motion of the forklift truck 10. That is, the object detection device 17 adjusts the importance of the position score, the aspect ratio score, and the area score according to the operation of the forklift truck 10.

In one example, it is assumed that the forklift truck 10 to which the camera 13 is attached makes sharp turn after the camera 13 captures the comparison image IMp and before the camera 13 captures the detection target image IMc.

In this case, as illustrated in FIGS. 17 and 18, the position of the target object T in the image IM varies between the comparison image IMp and the detection target image IMc. Therefore, the position of the bounding box B in the comparison image IMp is different from the position of the rectangular frame A indicating the area where the target object T is present in the detection target image IMc. On the other hand, the shape and the size of the target object T in the image IM do not significantly vary between the comparison image IMp and the detection target image IMc. Therefore, the aspect ratio Ap and the area Sp of the bounding box B in the comparison image IMp and the aspect ratio Ac and the area Sc of the rectangular frame A indicating the area where the target object T is present in the detection target image IMc are similar to each other.

From the above, when the object detection device 17 detects sharp turn of the forklift truck 10 as an operation of the forklift truck 10, the object detection device 17 sets β and γ to values larger than α. That is, the object detection device 17 makes the importance of the aspect ratio score and the area score higher than that of the position score.

In another example, it is assumed that the forklift truck 10 to which the camera 13 is attached rapidly accelerates after the camera 13 captures the comparison image IMp and before the camera 13 captures the detection target image IMc.

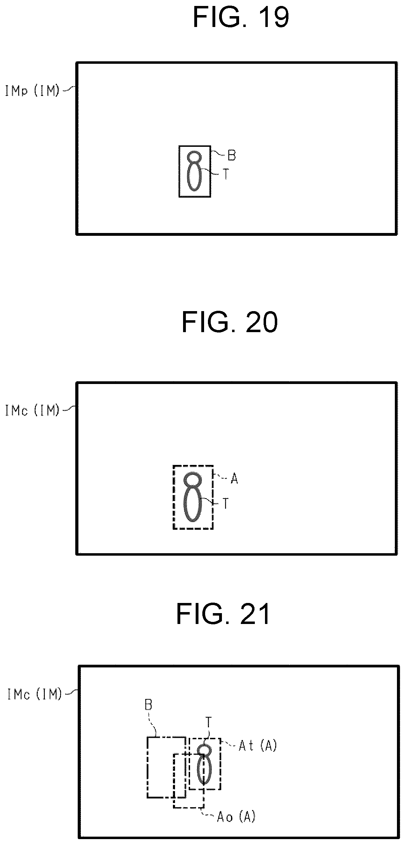

In this case, as illustrated in FIGS. 19 and 20, the size of the target object T in the image IM varies between the comparison image IMp and the detection target image IMc. Therefore, the area Sp of the bounding box B in the comparison image IMp is different from the area Sc of the rectangular frame A indicating the area where the target object T is present in the detection target image IMc. On the other hand, the position and the size of the target object T in the image IM do not significantly vary between the comparison image IMp and the detection target image IMc. Therefore, the position and the shape of the bounding box B in the comparison image IMp are similar to the position and the shape of the rectangular frame A indicating the area where the target object T is present in the detection target image IMc.

From the above, when the object detection device 17 detects rapid acceleration of the forklift truck 10 as an operation of the forklift truck 10, the object detection device 17 sets α and β to values larger than γ. That is, the object detection device 17 makes the importance of the position score and the aspect ratio score higher than the importance of the area score.

In this way, the object detection device 17 performs object detection processing according to the movement of the forklift truck 10 by calculating the similarity score in consideration of the movement of the forklift truck 10. Therefore, the precision in detecting the target object T may be further improved.

When a change in the state of the image of the target object T in the image IM is expected, the object detection device 17 may adjust α, β, and γ according to the expected change in the state of the image of the target object T.

For example, if a person, which is the target object T, is expected to stand and squat, the person who stands when the camera 13 captures the comparison image IMp may squat when the camera 13 captures the detection target image IMc.

In this case, the shape and size of the target object T in the image IM vary between the comparison image IMp and the detection target image IMc. Therefore, the aspect ratio and the area of the target object T in the image IM vary between the comparison image IMp and the detection target image IMc. Specifically, the aspect ratio Ap and the area Sp of the bounding box B in the comparison image IMp are smaller than the aspect ratio Ac and the area Sc of the rectangular frame A indicating the area where the target object T is present in the detection target image IMc. On the other hand, the position of the target object T in the image IM does not significantly vary between the comparison image IMp and the detection target image IMc. Therefore, the position of the bounding box B in the comparison image IMp is similar to the position of the rectangular frame A indicating the area where the target object T is present in the detection target image IMc.

Based on the above, the object detection device 17 sets α to a value larger than β and γ when it is predicted that the person who is the target object T stands and squats. That is, the object detection device 17 sets the importance of the position score higher than those of the aspect ratio score and the area score.

In this way, the object detection device 17 can perform the object detection processing according to the change in the state of the image of the target object T by calculating the similarity score in consideration of the predicted change in the state of the image of the target object T. Therefore, the precision in detecting the target object T may be further improved.

The object detection device 17 need not necessarily detect the area of the target object T from the entire part of the captured image IM. For example, when the position of the target object T in the image IM is moving from the right to the left in time series, the object detection device 17 need not necessarily detect the area where the target object T is present in the right region of the image IM.

For example, as illustrated in FIG. 21, the object detection device 17 provides a plurality of rectangular frames A in the detection target image IMc in the nth object detection processing. It is noted that, for the sake of description, only two rectangular frames A are illustrated in FIG. 21. A first rectangular frame A is referred to as a rectangular frame At that indicates the area where the target object T is present. A second rectangular frame A is referred to as a rectangular frame Ao that indicates the area where an object other than the target object T is present. The confidence scores of the rectangular frame At and the rectangular frame Ao are each less than the confidence score threshold. In FIG. 21, the bounding box B output in the (n-1)th object detection processing is illustrated by a two- dot chain line.

The rectangular frame Ao is located near the rectangular frame At. In addition, the aspect ratio and the area of the rectangular frame Ao are substantially the same as those of the rectangular frame At. In this case, the similarity score between the rectangular frame Ao and the bounding box B may be higher than the similarity score between the rectangular frame At and the bounding box B. Then, the object detection device 17 increases the confidence score of the rectangular frame Ao instead of the rectangular frame At in the addition processing. The object detection device 17 deletes the rectangular frame At whose confidence score is less than the confidence score threshold in the deletion processing. On the other hand, the rectangular frame Ao whose confidence score has become equal to or higher than the confidence score threshold through the addition processing remains without being deleted. As a result, an erroneous detection occurs in which the rectangular frame Ao is output as the bounding box B.

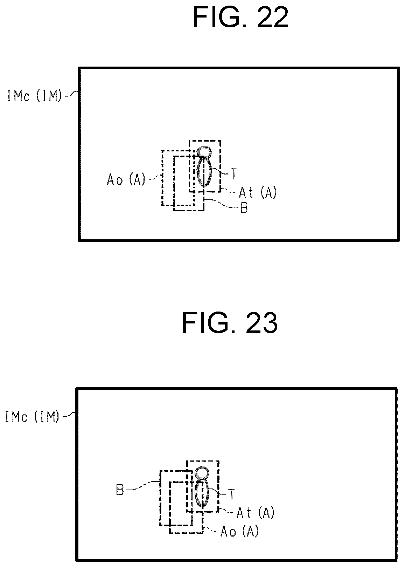

As illustrated in FIG. 22, in the (n+1)th object detection processing, the object detection device 17 detects the area where the target object T is present from the detection target image IMc using the processing result of the nth object detection processing. That is, in the (n+1)th object detection processing, the object detection device 17 detects the area where the target object T is present from the detection target image IMc using the detection result including the erroneous detection. Therefore, in the (n+1)th object detection processing, the similarity score between the rectangular frame Ao and the bounding box B becomes higher than the similarity score between the rectangular frame At and the bounding box B. Thus, the object detection device 17 increases the confidence score of the rectangular frame Ao instead of the rectangular frame At in the addition processing. The object detection device 17 deletes the rectangular frame At in the deletion processing when the confidence score of the rectangular frame At is less than the confidence score threshold. On the other hand, the rectangular frame Ao whose confidence score has become equal to or higher than the confidence score threshold through the addition processing remains without being deleted. As a result, an erroneous detection in which the rectangular frame Ao is output as the bounding box B also occurs in the (n+1)th object detection processing.

As illustrated in FIG. 23, in the (n+2)th object detection processing, the object detection device 17 detects the area where the target object T is present from the detection target image IMc using the processing result of the (n+1)th object detection processing. That is, in the (n+2)th object detection processing, the object detection device 17 detects the area where the target object T is present from the detection target image IMc using the detection result including the erroneous detection. Therefore, in the (n+2)th object detection processing, the similarity score between the rectangular frame Ao and the bounding box B becomes higher than the similarity score between the rectangular frame At and the bounding box B. Thus, the object detection device 17 increases the confidence score of the rectangular frame Ao instead of the rectangular frame At in the addition processing. The object detection device 17 deletes the rectangular frame At in the deletion processing when the confidence score of the rectangular frame At is less than the confidence score threshold. On the other hand, the rectangular frame Ao whose confidence score has become equal to or higher than the confidence score threshold through the addition processing remains without being deleted. As a result, an erroneous detection in which the rectangular frame Ao is output as the bounding box B also occurs in the (n+2)th object detection processing. In this way, if an erroneous detection occurs in one object detection processing, the erroneous detection may occur in series in subsequent object detection processing.

In order to suppress an occurrence of such a series of erroneous detection, the object detection device 17 may perform the object detection processing as follows.

A rectangular frame A whose confidence score is less than the confidence score threshold before the addition processing is defined as a low-confidence rectangular frame. A rectangular frame A whose confidence score is equal to or greater than the confidence score threshold before the addition processing is defined as a high-confidence rectangular frame. The memory 17b of the object detection device 17 stores whether the rectangular frame A to be output as the bounding box B in the comparison image IMp is the low-confidence rectangular frame or the high-confidence rectangular frame.

The above-mentioned series of erroneous detection occurs due to a series of low confidence occurring over a plurality of object detection processing. The series of low confidence indicates a case in which a rectangular frame A having the similarity score that satisfies a predetermined condition is a low-confidence rectangular frame and a rectangular frame A to be output as the bounding box B used for calculating the similarity score between such a rectangular frame A having the similarity score that satisfies the predetermined condition and the rectangular frame A to be output as the bounding box B is a low-confidence rectangular frame.

The object detection device 17 counts the number of consecutive times of the series of low confidence over the plurality of times of the object detection processing. The object detection device 17 reduces the increase amount of the confidence score to be added in the addition processing depending on the number of counts. For example, the object detection device 17 may decrease the increase amount of the confidence score in the addition processing as the number of counts increases.

For example, in the nth object detection processing, the confidence score of the rectangular frame At before the addition processing is less than the confidence score threshold. Thus, the rectangular frame At is a low-confidence rectangular frame. It is assumed that the rectangular frame A to be output as the bounding box B, which is the detection result of the (n-1)th object detection processing used to calculate the similarity score with the rectangular frame At, is a high-confidence rectangular frame. In this case, the object detection device 17 determines that the series of low confidence does not occur.

In the (n+1)th object detection processing, the confidence score of the rectangular frame At before the addition processing is less than the confidence score threshold. Thus, the rectangular frame At is a low-confidence rectangular frame. In addition, the rectangular frame A to be output as the bounding box B, which is the detection result of the nth object detection processing used to calculate the similarity score with the rectangular frame At, is a low-confidence rectangular frame. Therefore, the object detection device 17 determines that the series of low confidence occurs. The object detection device 17 counts one for the number of consecutive times of the series of low confidence.

In the (n+2)th object detection processing, the confidence score of the rectangular frame At before the addition processing is less than the confidence score threshold. Thus, the rectangular frame At is a low-confidence rectangular frame. In addition, the rectangular frame A to be output as the bounding box B, which is the detection result of the (n+1)th object detection processing used to calculate the similarity score with the rectangular frame At, is a low-confidence rectangular frame. Therefore, the object detection device 17 determines that the series of low confidence occurs. Furthermore, the object detection device 17 counts up the number of consecutive times of the series of low confidence to two. Then, when increasing the confidence score of the rectangular frame At in the addition processing of the (n+2)th object detection processing, the object detection device 17 set the increase amount to a value smaller than the increase amount in the addition processing of the (n+1)th object detection processing. As a result, even if the confidence score of the rectangular frame At is increased by the addition processing, the confidence score of the rectangular frame At after the addition process becomes less than the confidence threshold. Therefore, the object detection device 17 deletes the rectangular frame At in the deletion processing. As a result, the series of erroneous detection may be stopped in the (n+2)the object detection processing.

The target object T detected by the object detection device 17 may be an object other than a person.

The object detection device 17 may be applied to a vehicle other than the forklift truck 10.

The object detection device 17 may be applied to a moving object or a structure other than a vehicle.

The camera 13 need not necessarily be a monocular camera. The camera 13 may be a stereo camera or a fisheye camera.

The number of cameras 13 may be modified in an appropriate manner.

A position where the camera 13 is mounted on forklift truck 10 may be modified in an appropriate manner. For example, when detecting the presence of a target object T in front of the forklift truck 10, the camera 13 may be mounted on the forklift truck 10 so as to capture an image in front of the forklift truck 10. For example, when detecting the presence of a target object T behind the forklift truck 10, the camera 13 may be mounted on the forklift truck 10 so as to capture an image behind the forklift truck 10.

The object detection device 17 and the vehicle control device 16 may be the same device. That is, the object detection device 17 may be one of the functions of the vehicle control device 16.

The vehicle control device 16 may be configured to show the detection result of the object detection device 17 on a display (not illustrated).

The object detection device 17 need not necessarily perform the NMS processing. That is, the object detection device 17 need not necessarily include the NMS processing unit.

The object detection device 17 may be configured to delete the rectangular frames A whose confidence score are close to 0 from the plurality of rectangular frames A before step S23. That is, the object detection device 17 may delete the rectangular frames A whose confidence score are clearly low before the NMS processing. Then, the object detection device 17 performs the NMS processing after the rectangular frames A whose confidence score are close to 0 are deleted. This reduces a processing load of the NMS processing.

In the addition processing of step S25, the predetermined condition for the similarity score may be modified in an appropriate manner as long as the predetermined condition allows the rectangular frame A similar to the bounding box B to be specified.

The contents of the first object detection processing may be different from those of the above embodiment as long as the area of the target object T can be detected from the first frame image IM1.

Additional Notes

The technical ideas that can be understood from the above embodiments and modifications are described below.

[1] An object detection device, which performs object detection processing to detect an area where a target object is present in images captured by a camera, the object detection device comprising: a memory configured to store a bounding box indicating the area where the target object is present output to a comparison image of the images; an acquisition unit configured to acquire a detection target image of the images, the detection target image being captured at a time after the comparison image is captured; a providing unit configured to provide a plurality of rectangular frames each indicating a candidate for the area where the target object is present in the detection target image; a calculation unit configured to perform calculation processing to calculate a similarity score that is the index indicating a degree of similarity between the bounding box in the comparison image and the rectangular frame A in the detection target image; an addition unit configured to perform addition processing to increase a confidence score of a rectangular frame, out of the plurality of rectangular frames, having the similarity score that satisfies a predetermined condition; a deletion unit configured to perform deletion processing to delete a rectangular frame, out of the plurality of rectangular frames, having the confidence score less than a confidence score threshold after the addition processing; and an output unit configured to output a rectangular frame remaining after the deletion processing as the bounding box for the comparison image.

[2] In the object detection device according to [1], the calculation unit calculates the similarity score using at least one of: a position score that is an index indicating the degree of similarity between a position of the bounding box in the comparison image and a position of the rectangular frame in the detection target image; an aspect ratio score that is an index indicating the degree of similarity between an aspect ratio of the bounding box in the comparison image and an aspect ratio of the rectangular frame in the detection target image; and an area score that is an index indicating the degree of similarity between an area of the bounding box in the comparison image and an area of the rectangular frame in the detection target image.

[3] In the object detection device according to [2], the calculation unit uses a product of the position score, the aspect ratio score, and the area score for the similarity score.

[4] In the object detection device according to [3], the object detection device is mounted on a vehicle and includes a motion detection unit that detects a motion of the vehicle, and the calculation unit adjusts importance of the position score, the aspect ratio score, and the area score based on the motion of the vehicle detected by the motion detection unit.

[5] In the object detection device according to any one of [1] to [4], the object detection device further comprises a NMS processing unit configured to perform NMS processing to the plurality of rectangular frames provided by the providing unit to calculate an overlap ratio by dividing an area of intersection of two of the rectangular frames overlapping with each other by an area of union of the two of the rectangular frames, and delete one of the two of the rectangular frames having the confidence score lower than the other of the two of the rectangular frames if the overlap ratio exceeds an overlap ratio threshold, and the calculation unit calculates the similarity score between the bounding box output to the comparison image and the other of the two of the rectangular frames remaining after the NMS processing as the calculation processing.

[6] In the object detection device according to any one of [1] to [5], the object detection device repeatedly performs high-precision processing to detect the area where the target object is present from the detection target image using the bounding box output to the comparison image, the memory stores whether one of the rectangular frames to be the bounding box output to the comparison image is a low-confidence rectangular frame having the confidence score lower than the confidence score threshold before the addition processing or a high confidence rectangular frame having the confidence score equal to or higher than the confidence score threshold before the addition processing, a series of the low-confidence is a state in which the rectangular frames having the similarity score that satisfies the predetermined condition is the low-confidence rectangular frame, and the one of the rectangular frames to be output as the bounding box to the comparison image used for calculating the similarity score between the rectangular frame having the similarity score that satisfies the predetermined condition and the one of the rectangular frames to be output as the bounding box is the low-confidence rectangular, the addition unit counts the number of detection of the series of low-confidence over a plurality of times of the object detection processing, and the addition unit reduces an increase amount of the confidence score in the addition processing according to the number of detection of the series of low-confidence.

**Claims**

1. An object detection device (17), which performs object detection processing to detect an area where a target object is present in images (IM) captured by a camera (13), the object detection device (17) comprising:

   a memory (17b) configured to store a bounding box (B) indicating the area where the target object is present, the bounding box (B) being output to a comparison image (IMp) of the images (IM);
   a processor (17a) configured to execute program codes or commands stored in the memory (17b);
   an acquisition unit configured to acquire a detection target image (IMc) of the images (IM), the detection target image (IMc) being captured at a time after the comparison image (IMp) is captured;
   a providing unit configured to provide a plurality of rectangular frames (A) each indicating a candidate for the area where the target object is present in the detection target image (IMc);
   a calculation unit configured to perform calculation processing to calculate a similarity score that is an index indicating a degree of similarity between the bounding box (B) in the comparison image (IMp) and the rectangular frame (A) in the detection target image (IMc);
   an addition unit configured to perform addition processing to increase a confidence score of a rectangular frame (A), out of the plurality of rectangular frames (A), having the similarity score that satisfies a predetermined condition;
   a deletion unit configured to perform deletion processing to delete a rectangular frame (A), out of the plurality of rectangular frames (A), having the confidence score less than a confidence score threshold after the addition processing; and
   an output unit configured to output a rectangular frame (A) remaining after the deletion processing as the bounding box (B) for the comparison image (IMp).

2. The object detection device (17) according to claim 1, **characterized in that**
   the calculation unit calculates the similarity score using at least one of:

   a position score that is the index indicating the degree of similarity between a position of the bounding box (B) in the comparison image (IMp) and a position of the rectangular frame (A) in the detection target image (IMc);
   an aspect ratio score that is the index indicating the degree of similarity between an aspect ratio of the bounding box (B) in the comparison image (IMp) and an aspect ratio of the rectangular frame (A) in the detection target image (IMc); and
   an area score that is the index indicating the degree of similarity between an area of the bounding box (B) in the comparison image (Imp) and an area of the rectangular frame (A) in the detection target image (Imc).

3. The object detection device (17) according to claim 2, **characterized in that**
   the calculation unit uses a product of the position score, the aspect ratio score, and the area score for the similarity score.

4. The object detection device (17) according to claim 3, **characterized in that**

   the object detection device (17) is mounted on a vehicle (10) and includes a motion detection unit that detects a motion of the vehicle (10), and
   the calculation unit adjusts importance of the position score, the aspect ratio score, and the area score based on the motion of the vehicle (10) detected by the motion detection unit.

5. The object detection device (17) according to any one of claims 1 to 4, further comprising

   a NMS processing unit configured to perform NMS processing to the plurality of rectangular frames (A) provided by the providing unit to calculate an overlap ratio by dividing an area of intersection of two of the rectangular frames (A) overlapping each other by an area of union of the two of the rectangular frames (A), and delete one of the two of the rectangular frames (A) having the confidence score lower than the other of the two of the rectangular frames (A) if the overlap ratio exceeds an overlap ratio threshold, **characterized in that**
   the calculation unit calculates the similarity score between the bounding box (B) output to the comparison image (IMp) and the rectangular frames (A) remaining after the NMS processing as the calculation processing.

6. The object detection device according to any one of claims 1 to 5, **characterized in that**

the object detection device repeatedly performs high-precision detection processing to detect the area where the target object is present from the detection target image (IMc) using the bounding box (B) output to the comparison image (IMp),

the memory (17a) stores whether one of the rectangular frames (A) to be the bounding box (B) output to the comparison image (IMp) is a low-confidence rectangular frame having the confidence score lower than the confidence score threshold before the addition processing or a high confidence rectangular frame having the confidence score equal to or higher than the confidence score threshold before the addition processing,

a series of low confidence is a state in which the rectangular frames (A) having the similarity score that satisfies the predetermined condition is the low-confidence rectangular frame, and the one of the rectangular frames (A) to be output as the bounding box (B) to the comparison image (IMp) used for calculating the similarity score between the rectangular frame (A) having the similarity score that satisfies the predetermined condition and the one of the rectangular frames (A) to be output as the bounding box (B) is the low-confidence rectangular,

the addition unit counts the number of consecutive times of the series of low confidence over a plurality of times of the object detection processing, and

the addition unit reduces an increase amount of the confidence score in the addition processing depending on the number of consecutive counts.

# FIG. 1

# FIG. 2

# FIG. 3

IM1
(IM, IMp)

B1 (B)

B2 (B)

P1 (T)

P2 (T)

# FIG. 4

START

ACQUIRE IMAGE — S11

PROVIDE RECTANGULAR FRAME — S12

DELETE RECTANGULAR FRAME HAVING CONFIDENCE SCORE LESS THAN CONFIDENCE SCORE THRESHOLD — S13

DELETE RECTANGULAR FRAME BY NMS PROCESSING — S14

OUTPUT RECTANGULAR FRAME REMAINING AFTER NMS PROCESSING AS BOUNDING BOX — S15

END

# FIG. 5

# FIG. 6

# FIG. 7

## FIG. 8

IM1
(IM, IMp)

A

P1 (T)

A

P2 (T)

## FIG. 9

START

ACQUIRE IMAGE ~S21

PROVIDE RECTANGULAR FRAME ~S22

DELETE RECTANGULAR FRAME BY NMS PROCESSING ~S23

CALCULATE SIMILARLITY SCORE ~S24

INCREASE CONFIDENCE SCORE OF RECTANGULAR FRAME BASED ON SIMILARITY SCORE ~S25

DELETE RECTANGULAR FRAME HAVING CONFIDENCE SCORE LESS THAN CONFIDENCE SCORE THRESHOLD ~S26

OUTPUT RECTANGULAR FRAME REMAINING AFTER NMS PROCESSING AS BOUNDING BOX ~S27

END

# FIG. 10

# FIG. 11

# FIG. 12

## FIG. 13

## FIG. 14

## FIG. 15

FIG. 16

FIG. 17

FIG. 18

# FIG. 19

IMp (IM)

B
T

# FIG. 20

IMc (IM)

A
T

# FIG. 21

IMc (IM)

B
T
At (A)
Ao (A)

# FIG. 22

IMc (IM)

Ao (A)

T

At (A)

B

# FIG. 23

IMc (IM)

B

T

At (A)

Ao (A)

Europäisches
Patentamt

European
Patent Office

Office européen
des brevets

# EUROPEAN SEARCH REPORT

Application Number

EP 23 21 4201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/270366 A1 (HAO YAN [CN] ET AL) 25 August 2022 (2022-08-25) * abstract * * paragraphs: [0018], [0020]-[0021], [0026], [0037], [0041]-[0048], [0050], [0064], [0075] * * figures 1, 3 * | 1-6 | INV. G06V20/52 G06V20/58 |
| A | MA YINGDONG ET AL: "Pedestrian Detection and Tracking Using HOG and Oriented-LBP Features", 21 October 2011 (2011-10-21), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 176 - 184, XP047344104, ISBN: 978-3-540-74549-5 * abstract * * pages 179-180, section 4. 'Pedestrian Tracking'; 4.1 'Detection Validation'; 4.2 'Pedestrian Tracking' * * figure 4 * | 1-6 | |
| A | TUDOR BARBU: "Pedestrian detection and tracking using temporal differencing and HOG features", COMPUTERS & ELECTRICAL ENGINEERING., vol. 40, no. 4, 6 January 2014 (2014-01-06), pages 1072-1079, XP055297001, GB ISSN: 0045-7906, DOI: 10.1016/j.compeleceng.2013.12.004 * the whole document * | 1-6 | TECHNICAL FIELDS SEARCHED (IPC) G06V |

The present search report has been drawn up for all claims

| Place of search | Date of completion of the search | Examiner |
|---|---|---|
| The Hague | 20 March 2024 | Sagrebin-Mitzel, M |

EPO FORM 1503 03.82 (P04C01)

## ANNEX TO THE EUROPEAN SEARCH REPORT
## ON EUROPEAN PATENT APPLICATION NO.

EP 23 21 4201

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2024

| Patent document cited in search report | Publication date | Patent family member(s) | Publication date |
|---|---|---|---|
| US 2022270366 A1 | 25-08-2022 | US 2021209368 A1<br>US 2022270366 A1<br>WO 2020124360 A1 | 08-07-2021<br>25-08-2022<br>25-06-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021163127 A